# FASCICULE DE BREVET EUROPEEN

(11) **EP 1 256 510 B1**
(45) Date de publication et mention de la délivrance du brevet: **06.10.2004**
(21) Numéro de dépôt: 02291054.1
(22) Date de dépôt: 25.04.2002
(51) Int. Cl.: B62D 21/15, B62D 21/09

(54) **Structure de véhicule automobile à comportement amélioré au choc**
Kraftfahrzeugstruktur mit verbessertem Kollisionsverhalten
Motor vehicle structure with improved impact behaviour

(30) Priorité: 11.05.2001 FR 0106264
(43) Date de publication de la demande: 13.11.2002
(73) Titulaire: Peugeot Citroen Automobiles SA, 92200 Neuilly sur Seine (FR)
(72) Inventeur: LeFevre, Eric, 95600 Eaubonne (FR)
(74) Mandataire: Thinat, Michel

(56) Documents cités:
- FR-A- 2 767 750
- US-A- 4 059 286
- US-A- 4 090 721

## Description

La présente invention concerne, de façon générale, les techniques de l'automobile.

Plus précisément, l'invention concerne une structure de véhicule automobile, comprenant un brancard, un berceau, au moins une première traverse, et, sur chacun des côtés droit et gauche du véhicule, un triangle de suspension de roue, le brancard étant essentiellement constitué de deux longerons, respectivement disposés sur les côtés droit et gauche du véhicule, symétriquement par rapport à un plan longitudinal médian de ce véhicule, les longerons comprenant, chacun sur le côté correspondant du véhicule, une poutre médiane droite ou gauche s'étendant dans une zone longitudinalement médiane du véhicule, une poutre antérieure droite ou gauche s'étendant vers l'avant du véhicule et surélevée par rapport à la poutre médiane, et une poutre inclinée droite ou gauche reliant la poutre médiane à la poutre antérieure du même côté du véhicule, le berceau reliant au moins entre elles les poutres médianes droite et gauche et étant constitué, au moins sur chacun des côtés droit et gauche du véhicule, d'une coquille supérieure et d'une coquille inférieure liées l'une à l'autre et enserrant entre elles un triangle de suspension correspondant, chaque triangle de suspension étant fixé au berceau par au moins deux points de fixation incluant un point de fixation antérieur et un point de fixation postérieur, et la première traverse reliant les extrémités antérieures des poutres antérieures.

Ce type de structure, utilisée sur des véhicules automobiles actuels et représentée par exemple sur la figure 1 du présent brevet, est bien connue de l'homme de métier et présente de nombreux avantages.

Néanmoins, la recherche constante d'un accroissement du niveau de sécurité fait naître en permanence de nouvelles exigences de performances de tenue des véhicules au choc, et en particulier bien sûr au choc frontal.

Or, un point faible fréquemment constaté sur les véhicules actuels est celui de la résistance insuffisante que peuvent opposer aux chocs frontaux les éléments de fixation du berceau sur le brancard.

L'invention, qui s'inscrit dans ce contexte, a précisément pour but de proposer une structure de véhicule conférant une résistance élevée à la fixation du berceau sur le brancard.

A cette fin, la structure de l'invention, par ailleurs conforme à la définition générique qu'en donne le préambule ci-dessus, est essentiellement caractérisée en ce que, de chaque côté du véhicule, les coquilles supérieure et inférieure du berceau présentent, devant le triangle de suspension correspondant et le point de fixation antérieur de ce triangle, un prolongement par lequel elles sont fixées l'une à l'autre.

De préférence, le prolongement du berceau forme un épaulement propre à s'appuyer sur le triangle correspondant en cas de choc frontal sur le véhicule.

La structure de véhicule de l'invention comprend avantageusement deux barres respectivement droite et gauche, s'étendant vers l'avant du véhicule sous les poutres antérieures droite et gauche respectivement, et dont chacune est raccordée au prolongement du berceau du côté correspondant du véhicule.

Dans un mode de réalisation préféré de l'invention, le prolongement du berceau forme un corps creux, et chacune des barres est, sur le côté correspondant du véhicule, raccordée à ce corps creux par encastrement.

La structure de véhicule de l'invention peut en outre comprendre une seconde traverse, reliant entre elles les extrémités antérieures des barres droite et gauche.

Il est par ailleurs possible de prévoir des tirants respectivement droit et gauche, dont chacun relie la barre du côté correspondant à la poutre antérieure du même côté.

La structure de l'invention comprend de préférence au moins une paire d'absorbeurs dont chacun est interposé entre une extrémité droite ou gauche de la première traverse et l'extrémité antérieure de la poutre antérieure du côté correspondant.

Cette structure peut aussi comprendre au moins une paire d'absorbeurs dont chacun est interposé entre une extrémité droite ou gauche de la seconde traverse et l'extrémité antérieure de la barre du côté correspondant.

Enfin, chacune des barres droite et gauche est de préférence tubulaire et par exemple réalisée par hydroformage.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue partielle en perspective d'une structure de véhicule connue;
- la figure 2 est une vue partielle en perspective d'une structure de véhicule conforme à la présente invention;
- la figure 3 est une vue agrandie d'un détail extrait de la figure 2;
- la figure 4 est une vue de dessus partielle de la structure illustrée à la figure 2;
- la figure 5 est une vue agrandie d'éléments de structure extraits de la figure 4;
- la figure 6 est une vue en coupe à échelle réduite des éléments de structure illustrés à la figure 5, ces éléments étant observés sous l'incidence définie par les flèches VI-VI de la figure 5;
- la figure 7 est une vue partielle éclatée en perspective des éléments de structure illustrés à la figure 5; et
- la figure 8 est une vue partielle en perspective des éléments de structure illustrés à la figure 5.

Comme annoncé précédemment, l'invention concerne une structure de véhicule automobile, qui, pour la partie se rapporte à l'invention, comprend essentiellement un brancard 1, un berceau 2, une traverse 3, et, sur chacun des côtés droit et gauche du véhicule, un triangle 9 de suspension de roue.

Le brancard 1 est lui-même principalement constitué de deux longerons 10d et 10g, qui sont respectivement disposés sur les côtés droit et gauche du véhicule, symétriquement par rapport au plan longitudinal médian P de ce véhicule.

Chacun des longerons 10d et 10g comprend une poutre médiane telle que 11d et 11g, une poutre antérieure telle que 12d et 12g, et une poutre inclinée telle que 13d et 13g, chaque poutre s'étendant sur l'un des côtés droit ou gauche du véhicule.

Les poutres médianes droite et gauche 11d et 11g s'étendent dans une zone longitudinalement médiane du véhicule, et supportent donc l'habitacle.

Les poutres antérieures droite et gauche 12d et 12g s'étendant vers l'avant du véhicule et sont surélevées par rapport aux poutres médianes 11d et 11g.

Par ailleurs, chacune des poutres inclinées droite et gauche 13d et 13g relie, sur le côté correspondant du véhicule, la poutre médiane 11d ou 11g relative à ce côté, à la poutre antérieure 12d ou 12g de ce même côté.

Le berceau 2, quant à lui, relie entre elles les poutres médianes droite et gauche 11d et 11g.

Ce berceau 2 est constitué, au moins sur chacun des côtés droit et gauche du véhicule, par une coquille supérieure 21 et une coquille inférieure 22, qui sont liées l'une à l'autre au moins par soudage, et qui enserrent entre elles un triangle de suspension 9 correspondant.

Chaque triangle de suspension 9 est fixé au berceau 2 par deux points de fixation, et plus précisément par un point de fixation antérieur 91, relativement proche de l'avant du véhicule, et un point de fixation postérieur 92, situé vers l'arrière du véhicule par rapport au point de fixation antérieur 91.

A chaque point de fixation, un palier élastique (non représenté) est interposé entre le berceau 2 et le triangle 9 pour laisser à ce dernier une certaine liberté de mouvement par rapport au berceau 2.

Enfin, la première traverse 3 relie les extrémités antérieures respectives, 120d et 120g, des poutres antérieures 12d et 12g.

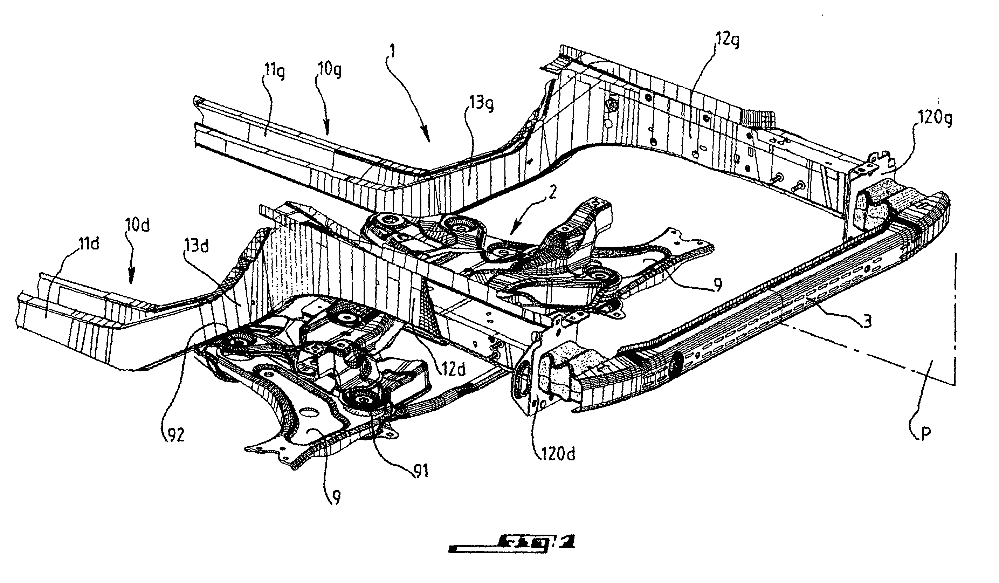

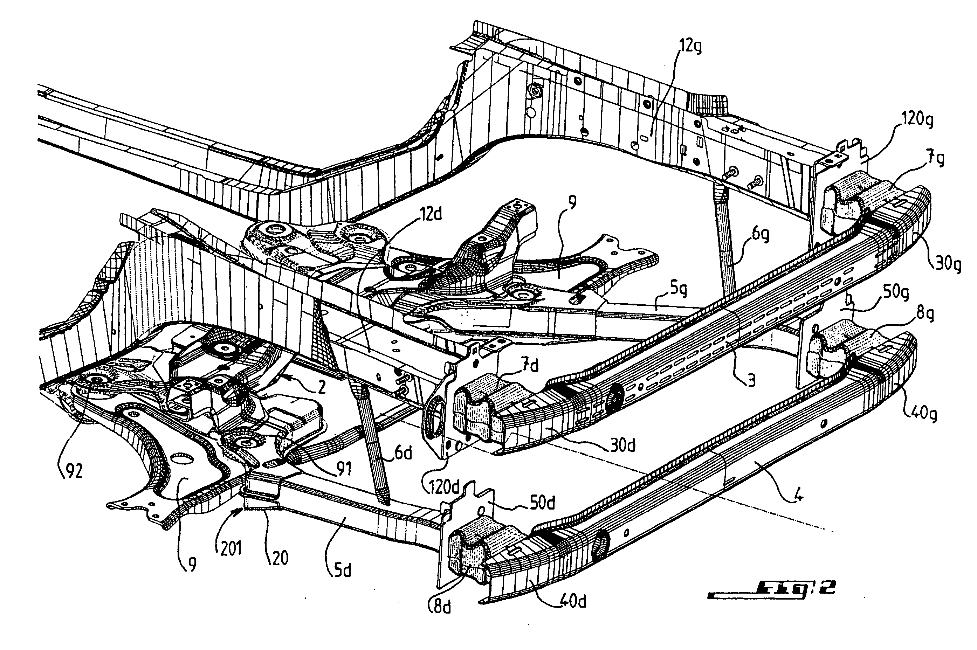

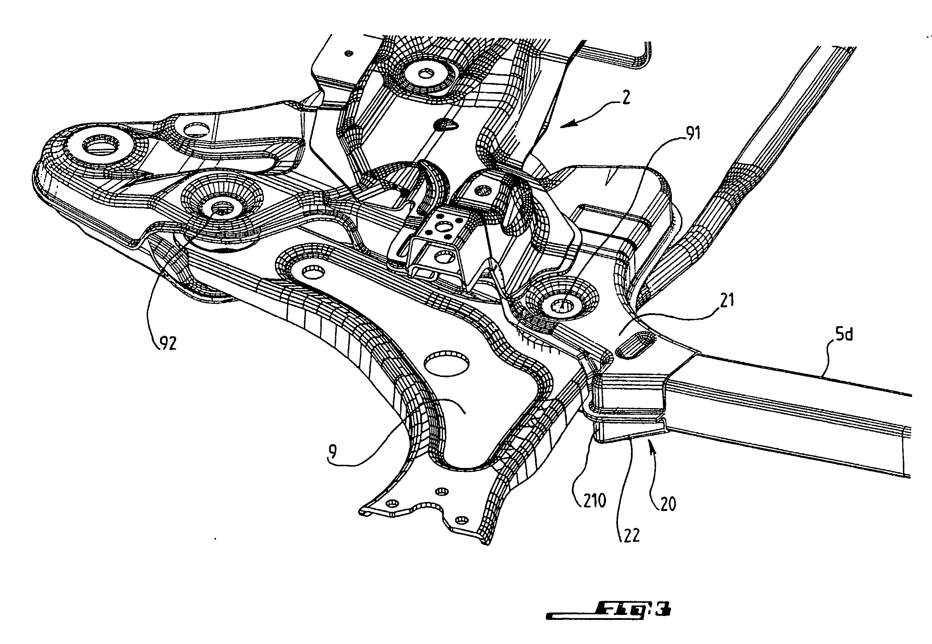

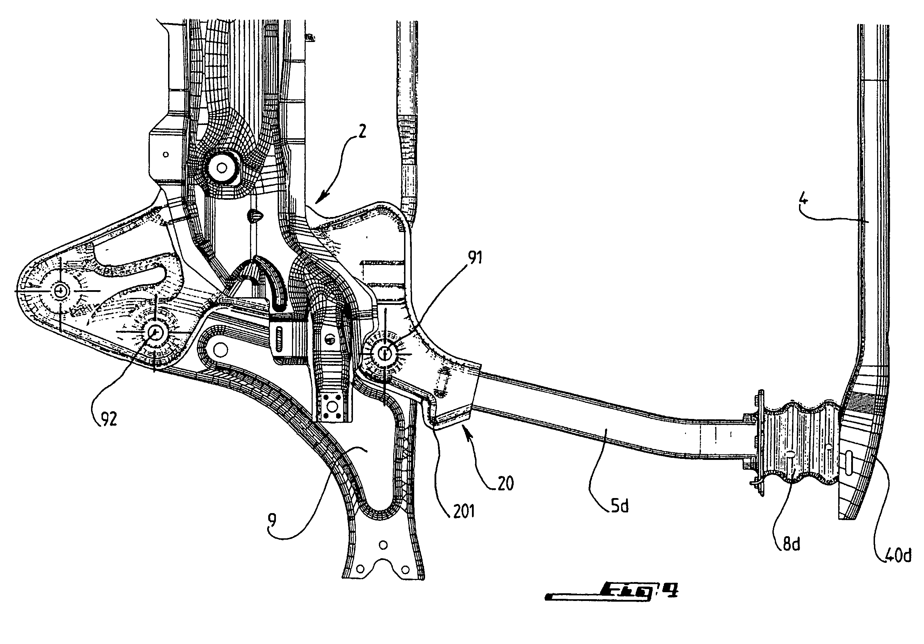

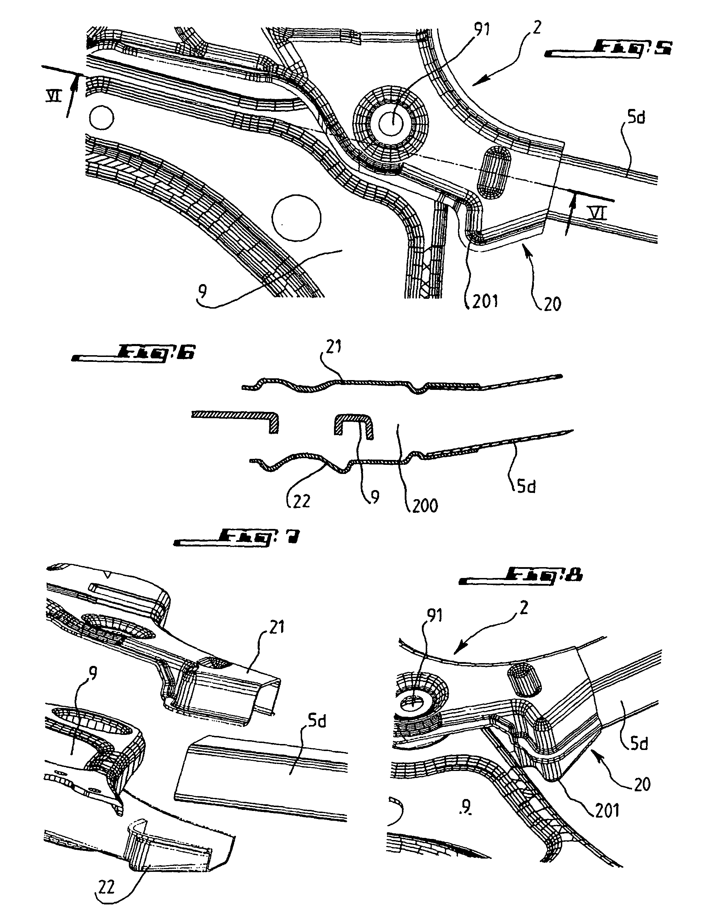

Selon l'invention (figures 3, 5, et 7), les coquilles supérieure 21 et inférieure 22 du berceau 2 présentent, de chaque côté du véhicule, et devant le triangle de suspension 9 correspondant et le point de fixation antérieur 91 de ce triangle, un prolongement 20 par lequel elles sont fixées l'une à l'autre.

Grâce à cet agencement, les risques de déchirure du berceau au niveau du point de fixation antérieur 91 sont considérablement réduits.

Par ailleurs, comme le montrent notamment les figures 2 et 3, le prolongement 20 du berceau 2 forme un épaulement 201 par lequel le berceau 2 peut, en cas de choc frontal du véhicule, s'appuyer sur le triangle 9 pour transmettre au reste de la structure les forces mises en oeuvre au cours du choc.

De préférence, cette structure comprend aussi deux barres 5d et 5g, respectivement droite et gauche, qui s'étendent vers l'avant du véhicule, respectivement sous les poutres antérieures droite et gauche 12d et 12g, chacune de ces barres 5d et 5g étant raccordée au prolongement 20 du berceau 2 du côté correspondant du véhicule.

Chacune des barres 5d et 5g est de préférence tubulaire et par exemple réalisée par hydroformage.

Comme le montrent le mieux les figures 6 et 7, le prolongement 20 du berceau 2 forme un corps creux 200, auquel chacune des barres 5d et 5g est, sur le côté correspondant du véhicule, raccordée par encastrement de cette barre dans ce corps creux 200.

Comme le montrent également ces figures, l'extrémité de la barre 5d ou 5g engagée dans le corps creux 200 se trouve en regard de l'épaulement 201 et peut ainsi buter sur cet épaulement en cas de choc.

Pour augmenter encore sa résistance au choc, la structure de l'invention peut comprendre une seconde traverse 4, qui relie entre elles les extrémités antérieures respectives, 50d et 50g, des barres droite et gauche 5d et 5g.

Des tirants droit et gauche, 6d et 6g sont avantageusement prévus, chaque tirant reliant la barre 5d ou 5g du côté correspondant à la poutre antérieure 12d ou 12g relative au même côté du véhicule.

Des absorbeurs 7d et 7g peuvent être interposés entre les extrémités droite et gauche, 30d et 30g, de la traverse supérieure 3, et les extrémités antérieures respectives 120d et 120g des poutres antérieures 12d et 12g.

De la même manière, des absorbeurs 8d et 8g peuvent être interposés entre les extrémités droite et gauche, 40d et 40g de la traverse inférieure 4, et les extrémités antérieures respectives 50d et 50g des barres 5d et 5g.

## Revendications

1. Structure de véhicule automobile, comprenant un brancard (1), un berceau (2), au moins une première traverse (3), et, sur chacun des côtés droit et gauche du véhicule, un triangle de suspension (9) de roue, le brancard (1) étant essentiellement constitué de deux longerons (10d, 10g), respectivement disposés sur les côtés droit et gauche du véhicule, symétriquement par rapport à un plan longitudinal médian (P) de ce véhicule, les longerons (10d, 10g) comprenant, chacun sur le côté correspondant du véhicule, une poutre médiane droite ou gauche (11d, 11g) s'étendant dans une zone longitudinalement médiane du véhicule, une poutre antérieure droite ou gauche (12d, 12g) s'étendant vers l'avant du véhicule et surélevée par rapport à la poutre médiane (11d, 11g), et une poutre inclinée droite ou gauche (13d, 13g) reliant la poutre médiane (11d, 11g) à la poutre antérieure (12d, 12g) du même côté du véhicule, le berceau (2) reliant au moins entre elles les poutres médianes droite et gauche (11d, 11g) et étant constitué, au moins sur chacun des côtés droit et gauche du véhicule, d'une coquille supérieure (21) et d'une coquille inférieure (22) liées l'une à l'autre et enserrant entre elles un triangle de suspension (9) correspondant, chaque triangle de suspension (9) étant fixé au berceau (2) par au moins deux points de fixation (91, 92) incluant un point de fixation antérieur (91) et un point de fixation postérieur (92), et la première traverse (3) reliant les extrémités antérieures (120d, 120g) des poutres antérieures (12d, 12g), **caractérisée en ce que**, de chaque côté du véhicule, les coquilles supérieure (21) et inférieure (22) du berceau (2) présentent, devant le triangle de suspension (9) correspondant et le point de fixation antérieur (91) de ce triangle, un prolongement (20) par lequel elles sont fixées l'une à l'autre.

2. Structure de véhicule suivant la revendication 1, **caractérisée en ce que** le prolongement (20) du berceau (2) forme un épaulement (201) propre à s'appuyer sur le triangle (9) correspondant en cas de choc frontal sur le véhicule.

3. Structure de véhicule suivant l'une quelconque des revendications précédentes, **caractérisée en ce qu'**elle comprend en outre deux barres (5d, 5g) respectivement droite et gauche, s'étendant vers l'avant du véhicule sous les poutres antérieures droite et gauche (12d, 12g) respectivement, et dont chacune est raccordée au prolongement (20) du berceau (2) du côté correspondant du véhicule.

4. Structure de véhicule suivant la revendication 3, **caractérisée en ce que** le prolongement (20) du berceau (2) forme un corps creux (200), et **en ce que** chacune des barres (5d, 5g) est, sur le côté correspondant du véhicule, raccordée à ce corps creux (200) par encastrement.

5. Structure de véhicule suivant la revendication 3 ou 4, **caractérisée en ce qu'**elle comprend une seconde traverse (4), reliant entre elles les extrémités antérieures (50d, 50g) des barres droite et gauche (5d, 5g).

6. Structure de véhicule suivant l'une quelconque des revendications précédentes combinée à la revendication 3, **caractérisée en ce qu'**elle comprend des tirants (6d, 6g) respectivement droit et gauche, dont chacun relie la barre (5d, 5g) du côté correspondant à la poutre antérieure (12d, 12g) du même côté.

7. Structure de véhicule suivant l'une quelconque des revendications précédentes, **caractérisée en ce qu'**elle comprend au moins une paire d'absorbeurs (7d, 7g) dont chacun est interposé entre une extrémité droite ou gauche (30d, 30g) de la première traverse (3) et l'extrémité antérieure (120d, 120g) de la poutre antérieure (12d, 12g) du côté correspondant.

8. Structure de véhicule suivant l'une quelconque des revendications précédentes combinée à la revendication 3, **caractérisée en ce qu'**elle comprend au moins une paire d'absorbeurs (8d, 8g) dont chacun est interposé entre une extrémité droite ou gauche (40d, 40g) de la seconde traverse (4) et l'extrémité antérieure (50d, 50g) de la barre (5d, 5g) du côté correspondant.

9. Structure de véhicule suivant l'une quelconque des revendications précédentes combinée à la revendication 3, **caractérisée en ce que** chacune des barres droite et gauche (5d, 5g) est tubulaire.

10. Structure de véhicule suivant la revendication 9, **caractérisée en ce que** chacune des barres (5d, 5g) est réalisée par hydroformage.

## Patentansprüche

1. Kraftfahrzeugaufbau, welcher einen Längsrahmen (1), einen Motorträger (2), mindestens einen ersten Querträger (3) und jeweils auf der rechten und linken Seite des Fahrzeugs einen Dreiecksquerlenker (9) für die Räder aufweist, wobei der Längsrahmen (1) im Wesentlichen aus zwei Längsträgern (10d, 10g) aufgebaut ist, die jeweils auf der rechten und linken Seite des Fahrzeugs symmetrisch zu einer Mittellängsebene (P) dieses Fahrzeugs angeordnet sind, wobei die Längsträger (10d, 10g) jeweils auf der entsprechenden Seite des Fahrzeugs einen rechten bzw. linken Mittelträger (11d, 11g) aufweisen, der sich in einem in Längsrichtung mittleren Bereich des Fahrzeugs erstreckt, während sich ein rechter bzw. linker vorderer Träger (12d, 12g) zum vorderen Ende des Fahrzeugs hin erstreckt und bezüglich des Mittelträgers (11d, 11g) höher liegt, und ein rechter bzw. linker geneigter Träger (13d, 13g) den Mittelträger (11d, 11g) mit dem vorderen Träger (12d, 12g) auf derselben Seite des Fahrzeugs verbindet, wobei der Motorträger (2) zumindest den rechten und den linken Mittelträger (11d, 11g) mit einander verbindet und dabei jeweils mindestens auf der rechten und der linken Seite des Fahrzeugs aus einer oberen Schale (21) und einer unteren Schale (22) besteht, wobei die beiden Schalen mit einander verbunden sind und zwischen sich einen entsprechenden Dreiecksquerlenker (9) einschließen, wobei jeder Dreiecksquerlenker (9) an dem Motorträger (2) mittels mindestens zweier Befestigungspunkte (91, 92) befestigt ist, welche einen vorderen Befestigungspunkt (91) und einen hinteren Befestigungspunkt (92) umfassen, und wobei der erste Querträger (3) die vorderen Enden (120d, 120g) der vorderen Träger (12d, 12g) verbindet, **dadurch gekennzeichnet, dass** auf jeder Seite des Fahrzeugs die obere Schale (21) und die untere Schale (22) des Motorträgers (2) vor dem entsprechenden Dreiecksquerlenker (9) und dem vorderen Befestigungspunkt (91) dieses Dreiecks eine Verlängerung (20) aufweisen, mittels welcher sie aneinander befestigt sind.

2. Kraftfahrzeugaufbau nach Anspruch 1, **dadurch gekennzeichnet, dass** die Verlängerung (20) des Motorträgers (2) eine Schulter (201) bildet, die sich im Falle eines frontalen Aufpralls auf dem Fahrzeug zur Abstützung auf dem entsprechenden Dreiecksquerlenker (9) eignet.

3. Kraftfahrzeugaufbau nach einem der vorhergehenden Ansprüche, **dadurch gekennzeichnet, dass** er des Weiteren zwei Stangen (5d, 5g) aufweist, die jeweils rechts und links liegen und sich jeweils unter dem vorderen rechten bzw. linken Träger (12d, 12g) zum vorderen Ende des Fahrzeugs hin erstrecken und von denen jede an der Verlängerung (20) des Motorträgers (2) auf der entsprechenden Seite des Fahrzeugs angekoppelt ist.

4. Kraftfahrzeugaufbau nach Anspruch 3, **dadurch gekennzeichnet, dass** die Verlängerung (20) des Motorträgers (2) einen Hohlkörper (200) bildet, und dass jede der Stangen (5d, 5g) auf der entsprechenden Seite des Fahrzeugs durch Einfalzen mit diesem Hohlkörper (200) verbunden ist.

5. Kraftfahrzeugaufbau nach Anspruch 3 oder 4, **dadurch gekennzeichnet, dass** er einen zweiten Querträger (4) aufweist, welcher die vorderen Enden (50d, 50g) der rechten und linken Stange (5d, 5g) mit einander verbindet.

6. Kraftfahrzeugaufbau nach einem der vorhergehenden Ansprüche in Verbindung mit Anspruch 3, **dadurch gekennzeichnet, dass** er jeweils eine rechte und eine linke Zugstange (6d, 5g) aufweist, von denen jede die Stange (5d, 5g) auf der entsprechenden Seite mit dem vorderen Träger (12d, 12g) auf derselben Seite verbindet.

7. Kraftfahrzeugaufbau nach einem der vorhergehenden Ansprüche, **dadurch gekennzeichnet, dass** er mindestens ein Paar Stoßaufnehmer (7d, 7g) aufweist, von denen jeder zwischen einem rechten bzw. linken Ende (30d, 30g) des ersten Querträgers (3) und dem vorderen Ende (120d, 120g) des vorderen Trägers (12d, 12g) auf der entsprechenden Seite zwischengeschaltet ist.

8. Kraftfahrzeugaufbau nach einem der vorhergehenden Ansprüche in Verbindung mit Anspruch 3, **dadurch gekennzeichnet, dass** er mindestens ein Paar Stoßaufnehmer (8d, 8g) aufweist, von denen jeder zwischen einem rechten bzw. linken Ende (40d, 40g) des zweiten Querträgers (4) und dem vorderen Ende (50d, 50g) der Stange (5d, 5g) auf der entsprechenden Seite zwischengeschaltet ist.

9. Kraftfahrzeugaufbau nach einem der vorhergehenden Ansprüche in Verbindung mit Anspruch 3, **dadurch gekennzeichnet, dass** sowohl die rechte als auch die linke Stange (5d, 5g) jeweils rohrförmig ist.

10. Kraftfahrzeugaufbau nach Anspruch 9, **dadurch gekennzeichnet, dass** jede der Stangen (5d, 5g) in einem Hydroforming-Verfahren hergestellt ist.

## Claims

1. Motor vehicle structure comprising a support frame (1), a cradle (2), at least a first cross-member (3) and, on each of the right and left sides of the vehicle, a wheel suspension wishbone (9), the support frame (1) essentially consisting of two longitudinal members (10d, 10g) which are respectively arranged on the right and left sides of the vehicle, symmetrically with respect to a median longitudinal plane (P) of this vehicle, the longitudinal members (10d, 10g) comprising, each on the corresponding side of the vehicle, a right or left median beam (11d, 11g) extending in a longitudinally median zone of the vehicle, a right or left anterior beam (12d, 12g) extending towards the front of the vehicle and raised with respect to the median beam (11d, 11g), and a right or left inclined beam (13d, 13g) connecting the median beam (11d, 11g) to the anterior beam (12d, 12g) on the same side of the vehicle, the cradle (2) at least interconnecting the right and left median beams (11d, 11g) and consisting, at least on each of the right and left sides of the vehicle, of an upper shell (21) and of a lower shell (22) which are joined to one another and hold firmly between them a corresponding suspension wishbone (9), each suspension wishbone (9) being fixed to the cradle (2) by at least two fixing points (91, 92) including an anterior fixing point (91) and a posterior fixing point (92), and the first cross-member (3) connecting the anterior ends (120d, 120g) of the anterior beams (12d, 12g), **characterized in that**, on each side of the vehicle, the upper (21) and lower (22) shells of the cradle (2) have, in front of the corresponding suspension wishbone (9) and the anterior fixing point (91) for this wishbone, an extension (20) by means of which these shells are fixed to one another.

2. Vehicle structure according to Claim 1, **characterized in that** the extension (20) of the cradle (2) forms a shoulder (201) able to press against the corresponding wishbone (9) in the event of a frontal impact on the vehicle.

3. Vehicle structure according to either one of the preceding claims, **characterized in that** it additionally comprises two respectively right and left bars (5d, 5g) extending towards the front of the vehicle under the respectively right and left anterior beams (12d, 12g), each of which bars is connected to the extension (20) of the cradle (2) on the corresponding side of the vehicle.

4. Vehicle structure according to Claim 3, **characterized in that** the extension (20) of the cradle (2) forms a hollow body (200), and **in that**, on the corresponding side of the vehicle, each of the bars (5d, 5g) is connected to this hollow body (200) by nesting.

5. Vehicle structure according to Claim 3 or 4, **characterized in that** it comprises a second cross-member (4) interconnecting the anterior ends (50d, 50g) of the right and left bars (5d, 5g).

6. Vehicle structure according to any one of the preceding claims combined with Claim 3, **characterized in that** it comprises respectively right and left tie rods (6d, 6g), each of which connects the bar (5d, 5g) on the corresponding side to the anterior beam (12d, 12g) on the same side.

7. Vehicle structure according to any one of the preceding claims, **characterized in that** it comprises at least one pair of absorbers (7d, 7g), each of which is interposed between a right or left end (30d, 30g) of the first cross-member (3) and the anterior end (120d, 120g) of the anterior beam (12d, 12g) of the corresponding side.

8. Vehicle structure according to any one of the preceding claims combined with Claim 3, **characterized in that** it comprises at least one pair of absorbers (8d, 8g), each of which is interposed between a right or left end (40d, 40g) of the second cross-member (4) and the anterior end (50d, 50g) of the bar (5d, 5g) of the corresponding side.

9. Vehicle structure according to any one of the preceding claims combined with Claim 3, **characterized in that** each of the right and left bars (5d, 5g) is tubular.

10. Vehicle structure according to Claim 9, **characterized in that** each of the bars (5d, 5g) is produced by hydroforming.
